# EUROPÄISCHE PATENTSCHRIFT

(11) **EP 2 245 728 B1**
(45) Veröffentlichungstag und Bekanntmachung des Hinweises auf die Patenterteilung: **30.08.2017**
(21) Anmeldenummer: 09712140.4
(22) Anmeldetag: 18.02.2009
(51) Int. Cl.: H02J 3/18, H02P 9/00, H02J 3/38, F03D 9/25, H02M 5/458, H02J 3/16

(54) **WINDKRAFTANLAGE MIT UMRICHTERREGELUNG**
WIND ENERGY PLANT HAVING CONVERTER CONTROL
ÉOLIENNE À RÉGULATION DU CONVERTISSEUR

(30) Priorität: 20.02.2008 DE 102008010260; 24.07.2008 DE 102008034532
(43) Veröffentlichungstag der Anmeldung: 03.11.2010
(73) Patentinhaber: Senvion GmbH, 22297 Hamburg (DE)
(72) Erfinder: FORTMANN, Jens, 13156 Berlin (DE)
(74) Vertreter: Glawe, Delfs, Moll
(86) Internationale Anmeldenummer: PCT/EP2009/001140
(87) Internationale Veröffentlichungsnummer: WO 2009/103505

(56) Entgegenhaltungen:
- US-A1- 2007 121 354
- US-A1- 2007 216 164
- BUENO E J ET AL: "Optimized design of a back-to-back NPC converter to be used as interface for renewable energies" INDUSTRIAL ELECTRONICS SOCIETY, 2005. IECON 2005. 31ST ANNUAL CONFERENCE OF IEEE, IEEE, PISCATAWAY, NJ, USA, 6. November 2005 (2005-11-06), Seiten 2537-2542, XP010876278 ISBN: 978-0-7803-9252-6
- MULLER S ET AL: "A viable alternative to ADJUST SPEED over a wide range at MINIMAL COST", IEEE INDUSTRY APPLICATIONS MAGAZINE, IEEE SERVICE CENTER, PISCATAWAY, NJ, US, vol. 8, no. 3, 1 May 2002 (2002-05-01), pages 26-33, XP011093311, ISSN: 1077-2618, DOI: 10.1109/2943.999610

## Beschreibung

Die Erfindung betrifft einen Umrichter einer Windenergieanlage, der am Rotor eines doppelt gespeisten Asynchrongenerators zur Einspeisung elektrischer Energie in ein elektrisches Netz angeschlossen ist, wobei der Umrichter einen generatorseitigen Wechselrichter und einen netzseitigen Wechselrichter umfasst, sowie ein Verfahren zum Steuern des Umrichters.

Frequenzumrichter finden in zunehmendem Maß Verwendung bei Windenergieanlagen. Moderne Windenergieanlagen sind üblicherweise drehzahlvariabel, so dass der Generator Wechselstrom mit unterschiedlicher Frequenz erzeugt. Zur Einspeisung in ein festfrequentes Versorgungsnetz (üblicherweise 50 Hz) ist eine Frequenzumrichtung erforderlich. Dazu werden Frequenzumrichter verwendet. Bevorzugt verwendet werden dabei Umrichter, die aus einem mit dem Rotor des Generators elektrisch verbundenen generatorseitigen Wechselrichter, einem Gleichspannungszwischenkreis und einem mit dem Netz elektrisch verbundenen netzseitigem Wechselrichter bestehen. Üblicherweise wurden Windenergieanlagen so betrieben, dass sie sich bei Netzfehlern, insbesondere Kurzschlüssen, vom Netz trennen. Mit zunehmender Verbreitung von Windenergieanlagen und dem Anstieg der installierten Windleistung ist aber nicht mehr nur ein einfaches Einspeisen des Wirkstroms in das elektrische Netz gefordert, sondern ein Betrieb der Windenergieanlagen, der die Netzspannung stützt, erwünscht. Bei den für Windenergieanlagen höherer Leistung bevorzugt verwendeten doppelt gespeisten Asynchrongeneratoren entsteht das Problem, dass die netzeinspeisenden Wechselrichter nur für etwa 1/3 der elektrischen Leistung ausgelegt sind und nun die zusätzlich notwendigen Ströme, um netzstützende Eigenschaften zu gewährleisten, nicht mehr erreichen können. Im Dokument US 2007/216164 wird eine Windenergieanlage gemäß dem Obergriff des Anspruchs 12 offenbart.

Im Dokument US 2007/121354 wird eine Windenergieanlage gemäß dem Vollumrichter-Konzept offenbart.

In der DE 10 2007 028 582 A1 wird vorgeschlagen bei einem Generator mit Vollumrichter, bei dem die gesamte elektrische Leistung über den Umrichter in das elektrische Netz gespeist wird, den generatorseitigen Wechselrichter ebenfalls direkt an das Netz anzuschließen, wenn der Generator keine Energie mehr erzeugt, um über den dann direkt ans Netz angeschlossenen generatorseitigen Wechselrichter zusätzliche Blindleistung ins Netz einzuspeisen.

Nachteilig an dieser Lösung ist, dass diese nur dann verwendet werden kann, wenn vom Rotor des Generators keine Energie abgegeben wird.

Aufgabe der vorliegenden Erfindung ist es die vorstehenden Nachteile zu vermeiden, übermäßige Belastungen der Wechselrichter zu verhindern und die vorhandenen Reserven der Wechselrichter besser auszunutzen.

Die erfindungsgemäße Lösung liegt in einem Verfahren und in einer Vorrichtung gemäß den Merkmalen der unabhängigen Ansprüche, vorteilhafte Weiterbildungen sind Gegenstand der abhängigen Ansprüche.

Erfindungsgemäß wird so verfahren, dass beim Steuern eines Umrichters einer Windenergieanlage, der am Rotor eines doppelt gespeisten Asynchrongenerators zur Einspeisung elektrischer Energie in ein elektrisches Netz angeschlossen ist, wobei der Umrichter einen generatorseitigen Wechselrichter, einen netzseitigen Wechselrichter und wenigstens einen Umrichterregler zum Regeln und/oder Steuern der von wenigstens einem der Wechselrichter an den Generator und/oder das elektrische Netz abgegebenen Ströme umfasst, die Verfahrensschritte Detektieren einer Änderung der anliegenden elektrischen Spannung, der abgegebenen Wirkströme und/oder der abgegebenen Blindströme an einem Wechselrichter, Bestimmen der detektierten Änderung, ob sie einer vorbestimmten Änderung entspricht und Änderung der Sollwerte der abzugebenden Wirkströme und/oder der abzugebenden Blindströme des anderen Wechselrichters, sofern die detektierte Änderung einer vorbestimmten Änderung entspricht, durchgeführt werden.

Die Erfindung hat erkannt, dass sich die Stromabgabe und Regelung einer Windkraftanlage mit doppelt gespeistem Asynchrongenerator erheblich verbessern lässt, wenn man nicht wie bisher die Regelungen der beiden Wechselrichter unabhängig voneinander betreibt, sondern die Regelung der beiden Wechselrichter derart aufeinander abstimmt, dass die Gesamtstromabgabe optimiert ist. Es ist bei einem Umrichter mit Gleichspannungszwischenkreis an einem doppelt gespeisten Asynchrongenerator so, dass dieser nicht nur die Wirk- oder Blindstromabgabe des netzseitigen Wechselrichters beeinflussen kann, indem er die über den Rotor des Generators fließenden Ströme verändert, sondern der generatorseitige Wechselrichter beeinflusst die Wirk- oder Blindstromabgabe maßgeblich dadurch, dass er mittels Rotorstromeinprägung eine weitgehend unabhängige Verstellung von Wirk- und Blindstrom im Ständer bewirkt.

Die Rotorstromeinprägung des generatorseitigen Wechselrichters mittels feldorientierter Regelung wurde beispielsweise in Asurdis: "Doppeltgespeister Drehstromgenerator mit Spannungszwischenkreisumrichter im Rotorkreis für Windkraftanlagen"; Dissertation TU Braunschweig; 1989 beschrieben.

Die Erfindung setzt an dem Punkt an, dass die bisherigen Regelungen entweder keinen Asynchrongenerator besitzen und somit die Wirk- und Blindstromabgabe nur über den netzseitigen Wechselrichter regeln können oder im Falle des Asynchrongenerators vorwiegend über die Rotorstromeinprägung des generatorseitigen Wechselgenerators regeln, ohne die Wechselrichter aufeinander abzustimmen, die ihrerseits nur auf ihre jeweiligen Eingangsgrößen Rotorstrom oder Zwischenkreisspannung abgestimmt wurden. Der wesentliche Vorteil einer abgestimmten Regelung zwischen den Wechselrichtern ist, dass bei den sich stetig unvorhersehbar ändernden Arbeitsbedingungen einer Windenergieanlage die Wechselrichter sich gegenseitig derart unterstützen können, dass bei vorbestimmten Änderungen oder Ereignissen an einem Wechselrichter, die den Wechselrichter in einen ungünstigen Arbeitspunkt bringen, der jeweils andere seinen Arbeitspunkt derart verändert, dass es zu einer Entlastung kommt. Die Regelung der Wechselrichter ist also nicht mehr nur noch jeweils einzeln auf das elektrische Netz oder den Generator ausgerichtet, sondern verfolgt auch zusätzliche Regelstrategien, die auf eine insgesamt geringere Belastung der einzelnen Wechselrichter abzielt.

Im Ergebnis werden insbesondere kritische Arbeitspunkte, die die einzelnen Umrichter überlasten könnten, vermieden, und der Umrichter könnte in der Folge entweder kleiner dimensioniert werden oder effizienter arbeiten.

Nachfolgend werden einige Begriffe erläutert:

Unter Blind- oder Wirkstrom wird hierbei nicht nur die Stromabgabe durch den Generatorstator, Generatorrotor oder die Wechselrichter verstanden, sondern auch die Stromaufnahme.

Unter Änderung der Wirk- oder Blindströme und ihrer Sollwerte wird eine Änderung der Amplitude oder Phasenlage der Ströme zueinander oder im Verhältnis zur im Netz anliegenden Spannung oder einem anderen Referenzwert verstanden. Insbesondere wird für den generatorseitigen Umrichter auch die Änderung der in den Generatorstator eingeprägten Ströme verstanden. Dabei werden die generatorseitigen Ströme vom Umrichterregler häufig über eine mathematische Transformation in sogenannten feldorientierten Koordinaten geregelt, beispielsweise i_{q} und i_{d} und erst bei der Ansteuerung der Wechselrichter zurück in ein dreiphasiges System überführt.

Unter einer vorbestimmten Änderung der anliegenden elektrischen Spannung, der abgegebenen Wirkströme und/oder der abgegebenen Blindströme an einem der Wechselrichter wird beispielsweise das Erreichen eines Grenzwerts, die Änderungsgeschwindigkeit oder eine sprungartige Änderung über einen vorgegebenen Wert der jeweiligen Größen hinaus verstanden. Es kann sich dabei aber auch um eine Ereignisfolge in vorbestimmten zeitlichen Intervallen oder das Ausführen vorbestimmter Funktionen durch den Umrichter handeln. Dabei muss die Änderung nicht nur auf die Spannung oder einzelnen Ströme begrenzt sein, sondern kann auch eine Kombination dieser Größen sein, z. B. der Leistung. Dabei muss die vorbestimmte Änderung auch nicht in allen drei Phasen gleichzeitig vorkommen, sondern kann auch nur eine oder zwei Phasen betreffen.

Bevorzugt ist dabei das Verfahren anzuwenden, wenn die vorbestimmte Änderung der anliegenden elektrischen Spannung, der abgegebenen Wirkströme und/oder der abgegebenen Blindströme an einem der Wechselrichter das Erreichen eines vorgegebenen Grenzwerts ist. Bei Erreichen eines Grenzwerts an einem Wechselrichter kann der andere Wechselrichter dann entweder einen Teil der Stromabgabe übernehmen und/oder versuchen, die Spannung zu verändern, so dass eine Grenzwertüberschreitung und eine Beschädigung oder Abschalten des Wechselrichters verhindert werden können.

Weiter ist vorgesehen, dass sich der maximal vorgebbare Sollwert der abzugebenden Blindströme des anderen Wechselrichters unter Berücksichtigung der abgegebenen Wirkströme und einer vorgebbaren Regelreserve der Wirkströme bestimmt wird. Vorrangige Aufgabe der Wechselrichter ist es, die Wirkstromabgabe zu regeln, die ihrerseits durch die äußerlich anliegenden Umgebungsbedingungen der Windenergieanlage vorgegeben wird. Um dieses zu gewährleisten muss die Wirkstromregelung immer Priorität vor dem Blindstrom erhalten und eine Erhöhung des Blindstroms am anderen Wechselrichter darf nicht zu einer Reduktion des Wirkstroms führen. Zusätzlich muss aber noch eine vorgebbare Reserve für den Wirkstrom erhalten bleiben, um schnell auf Änderungen in den Umgebungsbedingungen der Windenergieanlage reagieren zu können. In einer bevorzugten Weiterbildung ist vorgesehen, dass bei Erreichen eines oberen Grenzwerts der anliegenden Spannung eines Wechselrichters der andere Wechselrichter die Blindstromabgabe erhöht, um die anliegende Spannung am begrenzten Wechselrichter zu verringern. Es wird dadurch erreicht, dass der andere Wechselrichter zusätzlich zum begrenzten Wechselrichter für eine Reduzierung der hohen Spannung sorgt.

Gemäß einer bevorzugten Ausführungsform ist vorgesehen, dass die Summe der von den Wechselrichtern an das elektrische Netz abgegebenen Blind- und/oder Wirkströme, bzw. die Blind- und/oder Wirkleistungen weitgehend unverändert bleiben. Weitgehend meint in diesem Zusammenhang eine Änderung in der Gesamtabgabe von kleiner gleich 10%.

Dadurch wird erreicht, dass beispielsweise der insgesamt abgegebene Blindstrom bei den Wechselrichtern in der Summe unverändert bleibt, aber die Blindstromabgabe an dem höher belasteten Wechselrichter reduziert und am weniger belasteten Wechselrichter erhöht wird, so dass im elektrischen Netz keine Veränderung bemerkt wird, aber der Umrichter die Spitzenbelastung an den einzelnen Wechselrichtern oder den Wechselrichtern zugeordneten Leistungssträngen verringert. Insbesondere kann die Umrichterregelung dabei die Auslegungsgrenzen der Wechselrichter und der den Wechselrichtern zugeordneten Leistungsstränge berücksichtigen und die Strombelastung bezogen auf die Auslastung relativ zur Auslegungsgrenze in den jeweiligen Wechselrichtern oder den ihnen zugeordneten Leistungssträngen soweit wie möglich angleichen. Dieses hat den Vorteil, dass bei kurzzeitig hoher oder übermäßiger Belastung der elektrischen Komponenten der Windenergieanlage, z.B. durch Kurzschlüsse in der Nähe der Windenergieanlage, die beiden Leistungsstränge dieselbe anteilige Reserve haben und eine einseitige übermäßige Überlast vermieden werden kann.

Unter den Wechselrichtern zugeordneten Leistungssträngen werden in diesem Zusammenhang die elektrischen Komponenten verstanden, die vom Wechselrichter aus elektrisch gesehen zwischen dem Wechselrichter und dem elektrischen Netz liegen; also für den netzseitigen Wechselrichter je nach Ausführung beispielsweise die Netzdrossel, der Netzfilter, die umrichterseitigen Turmkabel und, je nach Transformatorausführung, die umrichterseitige Transformatorwicklung. Für den generatorseitigen Wechselrichter sind dieses je nach Ausführung beispielsweise die Verbindungskabel zum Generatorrotor einschließlich der Rotorturmkabel, der Generatorrotor, der Generatorstator, die statorseitigen Turmkabel und, je nach Transformatorausführung, die generatorseitige Transformatorwicklung.

Gemäß einer weiteren bevorzugten Ausführungsform ist vorgesehen, dass bei einer Spannungsasymmetrie derart, dass die Abweichung einer an einem Wechselrichter anliegenden Spannung einer oder zweier Phasen über einen Grenzwert hinausgeht, die Blindstromabgabe des anderen Wechselrichters derart verändert wird, dass die Spannungsasymmetrie verringert wird. Sofern also eine Veränderung in Form eines Spannungssprungs an nur einer oder zweier Phasen an einem Wechselrichter auftritt, kann der andere Wechselrichter durch gezieltes Einspeisen von Blindleistung der Spannungsasymmetrie entgegenwirken und eine Beschädigung der Windenergieanlage verhindern.

Gemäß einer besonders bevorzugten Ausführungsform ist vorgesehen, dass der Umrichterregler die abzugebenden Blindströme so regelt, dass bei schnellen großen Änderungen bevorzugt der Wechselrichter einen höheren Anteil an Blindströmen abgibt, der eine höhere Dynamik aufweist, also die abzugebenden Ströme auch schneller erreicht. Durch diese Erfindung wird erreicht, dass die bislang ungenutzte Reserve in der Regeldynamik des schnelleren Wechselrichters ausgenutzt wird. Dabei erreicht der schnellere Wechselrichter die Grenzen seines maximalen Anstiegs in der Stromabgabe, so dass wenigstens ein Teil der Stromabgabe auch vom Wechselrichter mit der niedrigeren Dynamik übernommen wird. In der Summe wird dadurch eine wesentlich bessere Reaktionsgeschwindigkeit des Gesamtsystems erreicht.

In einer bevorzugten Weiterbildung wird nach Erreichen des Gesamtstroms der wesentliche Teil der Stromabgabe dann auch durch den Wechselrichter mit der niedrigeren Dynamik übertragen. So wird erreicht, dass der Wechselrichter mit der hohen Dynamik entlastet wird und so betrieben werden kann, dass er kleinere Änderungen schneller ausregeln kann.

Gemäß einer besonders bevorzugten Ausführungsform ist bei einem Umrichterregler, der für jeden Wechselrichter einen eigenständigen Wechselrichterregler umfasst, ein Abgleichmodul vorgesehen, das zwischen den Wechselrichterreglern die jeweiligen relevanten Sollwerte, Istwerte und/oder Regelabweichungen für die Wirkströme, Blindströme und/oder anliegenden Spannungen überträgt.

Gemäß einem weiteren Aspekt der Erfindung, der gegebenenfalls unabhängigen Schutz verdient, ist die vorbestimmte Änderung eine insbesondere durch die Wirk- und/oder Blindstromabgabe des Wechselrichters verursachte Überschreitung eines vorgegebenen Temperaturgrenzwerts mindestens einer Komponente der Windenergieanlage, wobei sich die Komponente direkt im Leistungsfluss zwischen dem Wechselrichter und dem elektrischen Netz befindet. Die Stromabgabe des Wechselrichters ist wesentlich dafür verantwortlich, dass sich die Komponenten der leistungsführenden Leistungsstränge der jeweiligen Wechselrichter erwärmen. Für den generatorseitigen Wechselrichter sind dieses je nach Ausführung beispielsweise die Verbindungskabel zum Generatorrotor einschließlich der Rotorturmkabel, der Generatorrotor, der Generatorstator, die statorseitigen Turmkabel und, je nach Transformatorausführung, die generatorseitige Transformatorwicklung eines Dreiwicklungstransformators. Für den netzseitigen Wechselrichter sind dies je nach Ausführung beispielsweise die Netzdrossel, der Netzfilter, die umrichterseitigen Turmkabel und, je nach Transformatorausführung, die umrichterseitige Transformatorwicklung eines Dreiwicklungstransformators. Die Temperatur der stromführenden Komponenten wird durch den sie durchfließenden Strom maßgeblich beeinflusst. Überschreitet eine dem Wechselrichter zugeordnete Komponente nun einen vorgegebenen Temperaturgrenzwert, so kann durch eine Verringerung der Stromabgabe an dem Wechselrichter und die Erhöhung der entsprechenden Stromabgabe am anderen Wechselrichter der Temperaturanstieg begrenzt werden oder die Temperatur sogar verringert werden.

Gemäß einer besonders bevorzugten Ausführungsform erreicht der eine Wechselrichter eine für den Dauerbetrieb zulässige Stromgrenze, speist aber eine über dieser Stromgrenze liegende Strommenge ein. Die vorbestimmte Änderung umfasst über dieses Ereignis hinaus den Ablauf einer vorbestimmten Zeit oder das Erreichen eines vorbestimmten Temperaturgrenzwerts in dem dem Wechselrichter zugeordneten Leistungsstrang. Wird die vorbestimmte Zeit oder der Temperaturgrenzwert überschritten, so reduziert der übermäßig einspeisende Wechselrichter seine Stromabgabe und der andere Wechselrichter erhöht seine Stromabgabe, um die Stromreduzierung zumindest teilweise zu kompensieren.

Für weitere Erläuterungen und vorteilhafte Ausführungsformen wird auf die zu dem ersten Aspekt der Erfindung gegebenen Beschreibungen verwiesen.

Die Erfindung bezieht sich ferner auf eine entsprechende Windenergieanlage mit einem Umrichter und einem doppelt gespeisten Asynchrongenerator zum Ausführen des Verfahrens.

Die Erfindung wird nachfolgend unter Bezugnahme auf die beigefügten Zeichnungen anhand einer vorteilhaften Ausführungsform beispielhaft beschrieben. Bezüglich aller im Text nicht näher erläuterten erfindungsgemäßen Einzelheiten wird ausdrücklich auf die Zeichnungen verwiesen. Es zeigen:
- Fig. 1: eine Windenergieanlage;
- Fig. 2: den erfindungsgemäßen Umrichterregler;
- Fig. 3: den erfindungsgemäßen Umrichterregler in einer alternativen Ausführungsform; und
- Fig. 4: den erfindungsgemäßen Umrichterregler mit angeschlossener Temperaturregelung.

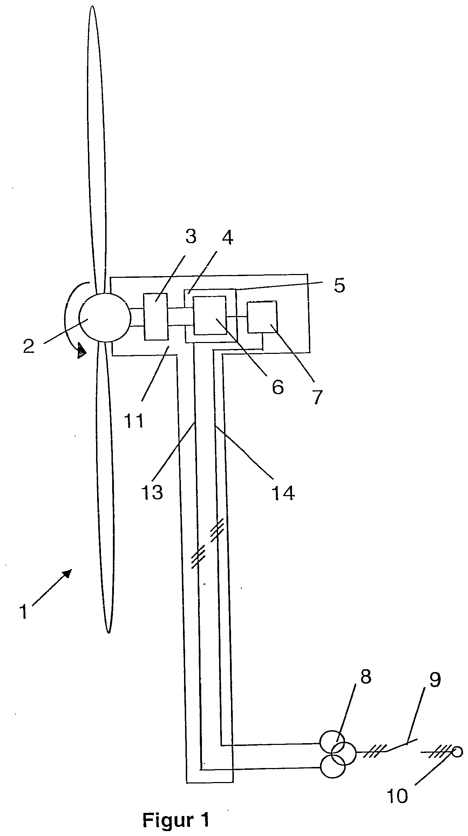

Der Aufbau der Windenergieanlage wird anhand von Figur 1 kurz erläutert. Der Windrotor 2 der Windenergieanlage 1 wird durch den Wind in Drehung versetzt. Der Windrotor 2 ist dabei mechanisch über ein Getriebe 3 mit dem Generator 4 verbunden und versetzt den Rotor 6 des Generators 4 in Drehung. Der Stator 5 des Generators ist über Leitungskabel 13 im Turm, einen Transformator 8 und einen Trennschalter 9 an das elektrische Netz 10 angeschlossen. Der Rotor 6 des Generators 4 ist an einen Umrichter 7 angeschlossen, der wiederum ebenfalls über Leistungskabel 14 im Turm, einen Transformator 8 und einen Trennschalter 9 an das elektrische Netz 10 angeschlossen ist.

Der Transformator 8 ist hier als Transformator mit drei Wicklungen ausgeführt, also mit jeweils separaten Wicklungen für den Leistungsstrang des netzseitigen Wechselrichters 72 und den generatorseitigen Wechselrichter 71. Ausführungen mit zwei oder einer anderen Anzahl von Wicklungen sind ebenfalls denkbar. Sofern der durch den Windrotor 2 angetriebene Generator 4 im Bereich der Nenndrehzahl, also im übersynchronen Bereich, betrieben wird, gibt der Generator 4 je nach Auslegung 60-90% seiner elektrischen Leistung über den Stator und 10-40% seiner elektrischen Leistung über den Rotor 6 an den Umrichter 7 ab.

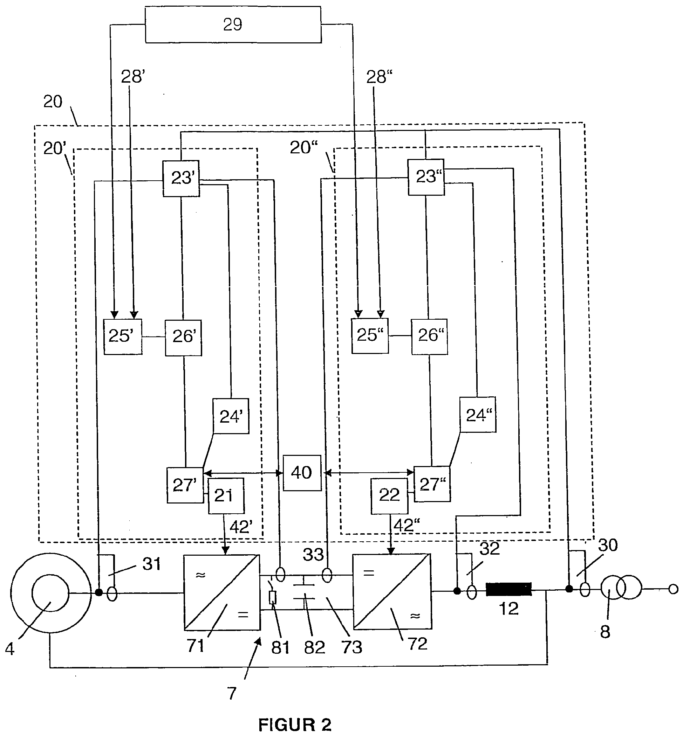

Figur 2 zeigt den Umrichter 7 mit einem generatorseitigen Wechselrichter 71 und einem netzseitigen Wechselrichter 72, die über einen Gleichspannungszwischenkreis 73 verbunden sind. Der netzseitige Wechselrichter 72 ist über eine Drossel 12 an einen Transformator 8 angeschlossen. Der generatorseitige Wechselrichter 71 ist an den Rotor 6 des Generators 4 angeschlossen, der seinerseits an den Transformator 8 angeschlossen ist. Im Gleichspannungszwischenkreis 73 befindet sich neben einem Kondensator 82 ein Schutzelement 81, das in der Figur aus einem Schalter und einem Widerstand besteht und bei Überspannungen im Gleichspannungszwischenkreis 73 diese verringert. Das Schutzelement 81 kann aber auch andere Schaltungstopologien aufweisen als in Figur 2 gezeigt.

Der Umrichterregler 20 beinhaltet einen generatorseitigen Umrichterregler 20' und einen netzseitigen Umrichterregler 20", die über ein Abgleichmodul 40 Sollwerte, Istwerte und Regelabweichungen austauschen. Jeder Umrichterregler 20', 20" umfasst einen Wechselrichterregler 21, 22, die mittels Steuerleitungen 42' und 42" die Schalter der Wechselrichter 71, 72 steuern.

Die jeweiligen elektrischen Größen der Wechselrichter und der Windenergieanlage, insbesondere die anliegenden Spannungen und fließenden Wirk- sowie Blindströme und die Zwischenkreisspannung, werden mittels Sensoren 30, 31, 32, 33 gemessen und in einem Messmodul 23', 23" den Umrichterreglern 20', 20" zugeführt. Das Messmodul 23', 23" stellt die Messwerte einem Änderungsbestimmungsmodul 24', 24" und dem Reglerabweichungsmodul 26', 26" zur Verfügung. Das Änderungsbestimmungsmodul 24', 24" stellt mittels in Form von Grenzwerten, Kennlinien oder Ereignisfolgen hinterlegter Änderungen fest, ob eine vorbestimmte Änderung der vom Messwertmodul 23', 23" übertragenen Messwerte vorliegt und welcher Art die Änderung ist. Dieses kann beispielsweise eine Grenzwertüberschreitung der am netzseitigen Wechselrichter 72 anliegenden Spannung sein oder auch ein anzulegender Blindstromsollwert sein, der die maximal erlaubte Strommenge des Wechselrichters überschreiten würde.

Darüber hinaus kann das Änderungsbestimmungsmodul 24', 24" auch bei den Wechselrichtersollwerten vorbestimmte Änderungen feststellen, bevor diese vom Reglermodul 27', 27" an die jeweiligen Wechselrichterregler 21, 22 angelegt werden. Das Änderungsbestimmungsmodul 24', 24" leitet den Messwerten oder Wechselrichtersollwerten zugeordnete Änderungen an das Reglermodul 27', 27" weiter.

Das Sollwertbestimmungsmodul 25', 25" ermittelt die von der Windenergieanlage und den einzelnen Wechselrichtern jeweils abzugebenden Leistungs- und Stromsollwerte, wobei es die von der Steuerung der Windenergieanlage 29 anliegenden Vorgabewerte und weitere zusätzliche Sensorwerte 28', 28" aus der Windenergieanlage, wie z. B. Generatordrehzahl, Windgeschwindigkeit oder Komponententemperaturen des Generators, des Umrichters oder der Stromleitungen, berücksichtigt. Das Sollwertbestimmungsmodul 25', 25" berücksichtigt dabei die je nach Betriebsart unterschiedlichen Drehmoment-/Drehzahlkennlinien. Für einen schalloptimierten Betrieb kann beispielsweise eine andere Kennlinie verwendet werden als für einen ertragsoptimierten Betrieb.
Das Reglerabweichungsmodul 26', 26" ermittelt nun die Reglerabweichung der vom Messwertmodul 23', 23" anliegenden Ist-Werte von den vom Sollwertmodul 25', 25" vorliegenden Sollwerten und gibt die festgestellte Abweichung an das Reglermodul 27', 27" weiter.

Das Reglermodul 27', 27" vergleicht die jeweiligen Reglerabweichungen der Wechselrichter 71,72 von den Sollwerten und gibt diese an die Wechselrichterregler 21, 22 weiter, sofern das Änderungsbestimmungsmodul 24', 24" keine Änderung erkannt hat. Sofern das Änderungsbestimmungsmodul 24', 24" aber eine vorbestimmte Änderung erkennt, übergibt das Reglermodul 27', 27" entsprechende Werte an das Abgleichmodul 40 und das andere Reglermodul korrigiert entsprechend hinterlegter Korrekturfunktionen die an den anderen Wechselrichterregler 21, 22 anzulegende Sollwerte.

Die Wechselrichterregler 21, 22 steuern dann die Schalter der jeweiligen Wechselrichter 71, 72 entsprechend den angelegten Sollwerten, so dass die entsprechenden Wirk- und/oder Blindströme abgegeben werden.

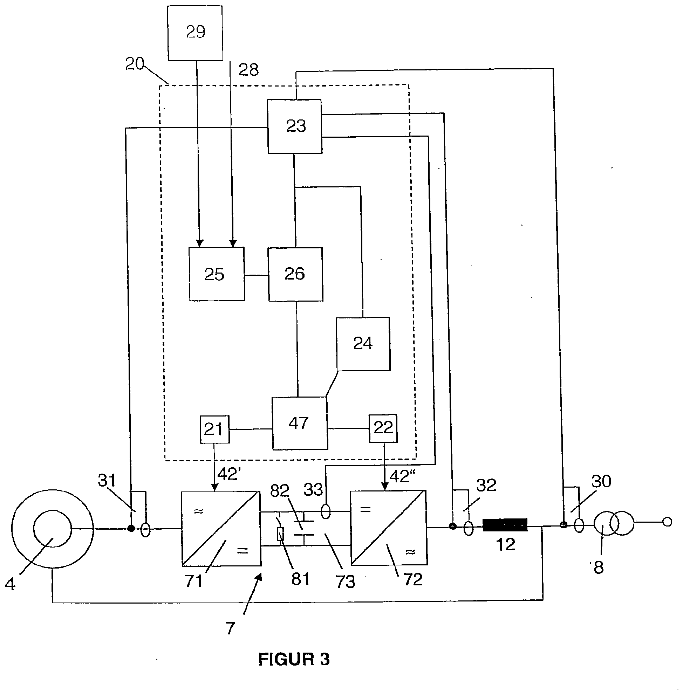

Figur 3 zeigt eine alternative Ausgestaltung eines Umrichterreglers 20 zur in Figur 2 beschriebenen Reglerstruktur. Dabei sind die Umrichterregler 20', 20" in einem Umrichterregler 20 zusammengefasst. Ebenfalls sind die getrennten Funktionsmodule in jeweils einem entsprechenden Funktionsmodul zusammengefasst. Der Ablauf der Regelung erfolgt in diesem Fall nicht mehr unbedingt nach Wechselrichtern getrennt, sondern die Abstimmung zwischen den Wechselrichtern erfolgt in diesem Beispiel erst bei der Sollwertvorgabe des zentralen Reglermoduls 47 an die Wechselrichterregler 21, 22. Das zentrale Reglermodul 47 kombiniert die Funktionen, die bei dem in Fig. 2 dargestellten Ausführungsbeispiel von dem Reglermodul 27', 27" und dem Abgleichmodul 40 wahrgenommen werden. Die Abstimmung zwischen den Wechselrichterreglern 21, 22 erfolgt dadurch schneller und flexibler.

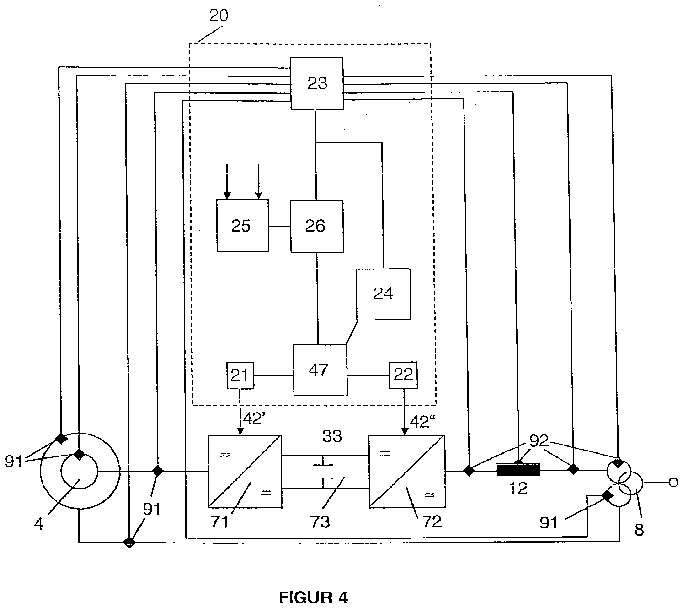

Figur 4 zeigt den erfindungsgemäßen Umrichterregler 20 mit angeschlossenen Temperaturfühlern 91, 92. Dabei sind im Leistungsstrang 4, 8, 13 des generatorseitigen Wechselrichters 71 Temperaturfühler 91 an den Komponenten 4, 8, 13 vorgesehen, die gefühlte Temperaturwerte an den Umrichterregler 20 geben. Ebenso sind im Leistungsstrang 8, 12, 14 des netzseitigen Wechselrichters 72 Temperaturfühler 92 an den Komponenten 8, 12, 14 vorgesehen. Überschreitet ein Temperaturwert einen vorgegebenen Temperaturgrenzwert, so reduziert die Umrichterregelung 20 die Stromabgabe an dem betroffenen Wechselrichter 71, 72 und erhöht die Stromabgabe um den gleichen Wert am anderen Wechselrichter 71, 72. Bevorzugt wird dieses bei der Blindstromabgabe durchgeführt.

Im Folgenden werden beispielhaft, aber nicht abschließend, einige Fälle erläutert, bei denen das erfindungsgemäße Verfahren Anwendung findet, ohne Bezug auf die Figuren zu nehmen.

Damit der netzseitige Wechselrichter in der Lage ist, Leistung in das Netz zu speisen, muss die Spannung, die durch den netzseitigen Wechselrichter bereitgestellt werden kann, höher sein, als die Spannung an vorgelagerten Bauteilen, wie z.B. der Drossel. Die Spannung am netzseitigen Wechselrichter ist dabei durch die Zwischenkreisspannung und das verwendete Modulationsverfahren bestimmt. Überschreitet die Spannung am vorgelagerten Bauteil die Spannung, die vom netzseitigen Wechselrichter bereitgestellt werden kann, so kann dieser keine Leistung mehr in das Netz speisen, es kommt zu einer Abschaltung des Wechselrichters. Daher muss bei ansteigender Netzspannung die Abgabe kapazitiven Blindstroms (übererregter Betrieb) des doppelt gespeisten Asynchrongenerators eingeschränkt werden, um einen weiteren Anstieg der Netzspannung zu verhindern.

Das Verfahren lässt sich derart optimieren, dass bei einem Anstieg der Spannung am netzseitigen Wechselrichter zunächst eine Anhebung der Spannung im Zwischenkreis bis auf die maximal zulässige Spannung geschieht und bei einem weiteren Anstieg der Spannung am netzseitigen Wechselrichter eine Verschiebung der Blindstromabgabe des netzseitigen Wechselrichters in den induktiven Bereich (spannungssenkender Betrieb) erfolgt, mit dem Ziel, die Spannung am netzseitigen Wechselrichter auf einen maximal zulässigen Wert zu begrenzen.
Die Wirkleistungsabgabe zur Regelung der Zwischenkreisspannung darf aber nicht beeinträchtigt werden, so dass die maximal mögliche induktive Blindstromeinspeisung durch den verbleibenden Blindstromanteil des netzseitigen Wechselrichters begrenzt ist. Die an das Netz abgegebene Blindleistung soll aber nicht vermindert werden, sondern in der Summe gleich bleiben. Daher wird die kapazitive Blindleistungsabgabe des generatorseitigen Wechselrichters erhöht, um die Reduktion des netzseitigen Wechselrichters auszugleichen. Dies kann bedeuten, dass durch die Steuerung der Stromabgabe des generatorseitigen Wechselrichters am Stator kapazitiver Blindstrom eingespeist wird, während der netzseitige Wechselrichter induktiven Blindstrom abgibt, um die Spannung am netzseitigen Wechselrichter zu begrenzen.

Wird die zulässige Spannungsgrenze des netzseitigen Wechselrichters noch immer nicht erreicht, erfolgt dann endgültig eine Absenkung der kapazitiven Blindstromabgabe des generatorseitigen Wechselrichters und damit des Gesamtsystems, bis die Spannungsgrenze am netzseitigen Wechselrichter wieder eingehalten wird.

Der Betrag des Stroms, der vom netzseitigen Wechselrichter in das Netz gespeist werden kann, ist durch die Dimensionierung der Schalter und der thermischen Auslegung des netzseitigen Wechselrichters begrenzt. Für den Betrieb des netzseitigen Wechselrichters muss immer ein Vorrang für die Wirkstromeinspeisung vorgesehen werden, damit die Spannung im Zwischenkreis konstant gehalten werden kann. Der verbleibende Strom kann - abzüglich einer gewissen Reserve für Regelvorgänge der Wirkstromregelung - für die Einspeisung von Blindstrom genutzt werden.

Wird während des Betriebs die für den Dauerbetrieb zulässige Grenze der Stromeinspeisung am netzseitigen Wechselrichter erreicht, erfolgt eine Reduktion der Blindstromeinspeisung des netzseitigen Wechselrichters (unabhängig ob induktiv oder kapazitiv) in Richtung Null. Um aber die von der Windenergieanlage an das elektrische Netz abgegebene Blindleistung nicht zu reduzieren, erfolgt eine Steuerung der Stromabgabe am Stator durch den generatorseitigen Wechselrichter derart, dass ein erhöhter Blindstrom über den Stator ins elektrische Netz eingespeist wird.

Dieses Verfahren bietet im Betrieb den Vorteil, dass immer die maximal verfügbare Blindleistung des netzseitigen Wechselrichters genutzt werden kann, und sofern eine Grenze der Stromlieferfähigkeit des netzseitigen Wechselrichters erreicht wird, kann der generatorseitige Wechselrichter diese Einspeisung übernehmen, ohne dass es zu einer Reduktion der Blindleistungseinspeisung der Windenergieanlage insgesamt kommt.

Die Spannung am generatorseitigen Wechselrichter ist vor allem abhängig von der Netzspannung, der Anlagendrehzahl und der Blindstromeinspeisung des generatorseitigen Wechselrichters. Steigt die Spannung des generatorseitigen Wechselrichters über eine zulässige Grenze, insbesondere bei hohen Drehzahlen und hoher Spannung oder einer Veränderung der Netzfrequenz, so erfolgt in der Regel eine Abschaltung der Windenergieanlage. Diesem versucht man zunächst entgegenzuwirken, indem der Generator in einen induktiveren Arbeitspunkt gebracht wird. Reicht aber die Spannungsabsenkung durch den generatorseitigen Wechselrichter nicht aus, um eine ausreichend niedrige Spannung zu erzielen, wird durch den netzseitigen Wechselrichter zusätzlich induktive Blindleistung eingespeist, um die Spannung am generatorseitigen Wechselrichter weiter abzusenken. Auch im Fall eines Dreiwicklertrafos, wie in Figur 1 gezeigt, kann der netzseitige Wechselrichter einen Beitrag zur Spannungssenkung am generatorseitigen Wechselrichter liefern.

Ist die Spannung am generatorseitigen Wechselrichter aber noch immer zu hoch, kann die Wirkleistungsabgabe des doppelt gespeisten Asynchrongenerators reduziert werden. Damit steht sowohl im generatorseitigen Wechselrichter als auch im netzseitigen Wechselrichter zusätzlicher Strom für die Blindstromeinspeisung zur Verfügung.

In der Regel erfolgt eine Kompensation der Blindstromaufnahme des Generators durch den generatorseitigen Wechselrichter. Im Fall einer 2MW Windenergieanlage sind dies z.B. etwa 200MVA oder etwa 100A. Soll nun, z.B. für den Betrieb einer Windenergieanlage bei niedrigeren Drehzahlen, ein hohes Moment gefahren werden, so kann dies insbesondere in der Nähe des Synchronpunkts des Generators eine Leistungsreduktion des generatorseitigen Wechselrichters erfordern, um eine thermische Überlastung zu verhindern. Der Grund dafür ist, dass die Frequenz des generatorseitigen Wechselrichters im Bereich des Synchronpunkts fast Null ist, so dass damit die Einspeisung von Gleichströmen notwendig ist.

Diese führen jedoch zu einer ungleichen Belastung des generatorseitigen Wechselrichters, so dass einzelne Halbbrücken deutlich stärker belastet werden. Um nun eine Überlastung des generatorseitigen Wechselrichters zu vermeiden, erfolgt in der Regel nahe des Synchronpunkts eine Reduktion der Stromgrenze für den Dauerbetrieb. Wird - insbesondere in der Nähe des Synchronpunkts - die Dauerbetriebsgrenze für die Stromabgabe des generatorseitigen Wechselrichters erreicht, so wird die Blindstromeinspeisung des generatorseitigen Wechselrichters reduziert, so dass ein höherer Anteil des Stroms für die Wirkstromeinspeisung zur Verfügung steht. Der nun fehlende Anteil des Blindstroms wird von netzseitigen Wechselrichtern übernommen, so dass die Blindleistungseinspeisung des Gesamtsystems nicht beeinträchtigt wird. Darüber hinaus wird die Drehzahl der Windenergieanlage derart geregelt, dass sie nur kurzzeitig in der Nähe des Synchronpunkts bleibt, um eine Reduktion der Wirkleistungsabgabe zu vermeiden.

Liegen im Netz an den drei Phasen unterschiedlich hohe Spannungen an, kommt es zu einer unsymmetrischen Einspeisung von Strom. In der Folge können Bauteile überlastet werden, außerdem kann die unsymmetrische Belastung des Generators zu Leistungspendelungen führen. Zusätzlich führen die Gegensystemströme im Generator zu unerwünschten Verlusten, da es - insbesondere im Rotor aufgrund der höheren Frequenz des Stroms zu einer Stromverdrängung kommt. Zur Vermeidung solcher Störungen werden Windenergieanlagen mit doppelt gespeistem Asynchrongenerator mit Gegensystemregelungen ausgestattet, die die Stromabgabe in das Netz wieder vergleichmäßigen. Bei einer Windenergieanlage mit doppelt gespeistem Asynchrongenerator wird mit dem generatorseitigen Wechselrichter eine Gegensystemregelung der Wirkströme vorgenommen, um die Belastung der Windenergieanlage zu minimieren. Die erfindungsgemäße Regelung verbessert diese an sich bekannte Gegensystemregelung dadurch, dass der netzseitige Wechselrichter zusätzlich Gegensystem-Blindstrom (induktiv im Gegensystem) zur Reduktion der Spannungsasymmetrie einspeist. Die damit reduzierte Gegensystemspannung stabilisiert das Netz und wirkt sich darüber hinaus positiv auf die Windenergieanlage aus, da damit z.B. das Gegensystem der Spannung an den Antrieben (Pumpen, Lüfter, Azimut, ...) reduziert wird.

Die Windenergieanlage mit doppelt gespeistem Asynchrongenerator ist mit einem Statorschalter ausgestattet, der es ermöglicht, auch bei abgeschaltetem generatorseitigen Wechselrichter weiter Blindleistung in das Netz zu speisen. Um eine kontinuierliche Blindleistungseinspeisung auch während des Zu- und Abschaltens des Stators zu gewährleisten, wird beim Unterschreiten einer definierten Drehzahl eine Betriebsart gewählt, bei der die Kompensation der Blindstromaufnahme des Generators ausschließlich durch den generatorseitigen Wechselrichter erfolgt, eine weitere Blindstrombereitstellung für das Netz erfolgt aber ausschließlich durch den netzseitigen Wechselrichter. Dadurch erfährt das elektrische Netz keine Änderung im Betrag der Blindleistungseinspeisung bei Zu- oder Abschalten des Stators, z.B. für eine kontinuierliche Spannungsregelung oder den Betrieb als Blindleistungsquelle im Netz (STATCOM).

Die Regelung der Ströme über den generatorseitigen Wechselrichter hat aufgrund der indirekten Wirkweise über den Generator üblicherweise Zeitkonstanten von über 10 ms. Im Gegensatz dazu können die Regelungszeitkonstanten des netzseitigen Wechselrichters weit darunter liegen, da er direkt am elektrischen Netz arbeitet. Bei einem Spannungssprung der an der Windenergieanlage anliegenden Spannung muss die Wirk- und/oder Blindstromabgabe ebenfalls sprungartig geändert werden. Dies kann einerseits darin begründet sein, dass die Leistungsabgabe konstant gehalten werden soll oder andererseits darin begründet sein, dass sich die Spannung nach dem Spannungssprung außerhalb der Toleranz befindet und eine Spannungsbeeinflussung der Netzspannung über die Blindstromabgabe erfolgen muss. Eine schnelle Regelung der Ströme erfolgt nun unter Berücksichtigung der oben genannten Regelungszeitkonstanten. Beim Regeln des netzseitigen Wechselrichters wird vom Umrichterregler nicht nur der Sollwert berücksichtigt, sondern zusätzlich auch die Regeldifferenz zwischen Soll- und Istwert des generatorseitigen Wechselrichters berücksichtigt und die Regeldifferenz auf den Sollwert des netzseitigen Wechselrichters addiert. Sofern der generatorseitige Wechselrichter außerhalb seiner Stromgrenzen betrieben wird oder der Stromanstieg noch nicht ausreichend ist, werden die Stromreserven des netzseitigen Wechselrichters genutzt, um die Regelgeschwindigkeit des Gesamtsystems zu verbessern.

Eine wesentliche Vorraussetzung für diese Regelung ist, dass die Kommunikation zwischen generatorseitigem Wechselrichter und netzseitigem Wechselrichter schnell ist, da sowohl der Sollwert des Blindstroms des netzseitigen Wechselrichters, als auch der Istwert des Blindstroms des Gesamtsystems für die Regelung des netzseitigen Wechselrichters notwendig sind.

Bei einer aufgeteilten Regelung mit zwei vollständig selbstständigen Reglern der Wechselrichter ohne einen übergeordneten Umrichterregler ist es bei Übergabe von Werten an den netzseitigen Wechselrichter zur Sicherstellung der notwendigen Regelgeschwindigkeit nötig, dass dem Regler des netzseitigen Wechselrichters auch der Istwert des Blindstroms des generatorseitigen Wechselrichters in jedem Rechenschritt übergeben wird.

Die Windenergieanlage mit doppelt gespeistem Asynchrongenerator besitzt gegenüber Windenergieanlagen mit Vollumrichtersystemen, bei denen die gesamte elektrische Leistung über den Umrichter fließt, einen größeren Stoßkurzschlussstrom. Der Stoßkurzschlussstrom ist eine bei Kurzschlüssen im Netz auftretende Stromspitze, die von der Windenergieanlage ins Netz abgegeben wird. Durch einen hohen Stoßkurzschlussstrom können der Windenergieanlage im Netz vorgelagerte Komponenten beschädigt werden. Der Stoßkurzschlussstrom kann durch eine Stromspitze am generatorseitigen Wechselrichter detektiert werden. Die Erfindung ermöglicht nun eine Regelung zu verwenden, bei dem ein Teil des Stoßkurzschlussstroms durch den netzseitigen Wechselrichter kompensiert und/oder übernommen wird. Ein Stoßkurzschlussstrom weist Blindstrom und Wirkstromanteile auf, wobei der netzseitige Wechselrichter den meist induktiven Blindstrom durch Einspeisen von kompensierendem Blindstrom, also meist kapazitivem Blindstrom, ausgleichen kann. Der Wirkstrom kann nicht so einfach kompensiert werden. Dieser muss in eine elektrische Last umgeleitet werden. Dazu leitet der netzseitige Wechselrichter den Strom in den Zwischenkreis des Umrichters. Dies führt dazu, dass die Spannung des Zwischenkreises ansteigt und das im Zwischenkreis des Umrichters angeschlossene Schutzelement, meist ein Zwischenkreischopper mit Lastwiderstand die Energie oder zumindest einen Teil der Energie des Stoßkurzschlussstroms aufnimmt. Durch diese Regelung kann der Stoßkurzschlussstrom wesentlich verringert werden.

## Patentansprüche

1. Verfahren zum Steuern eines Umrichters einer Windenergieanlage, der am Rotor eines mit seinem Stator an einem elektrischen Netz angeschlossenen doppelt gespeisten Asynchrongenerators zur Einspeisung elektrischer Energie in das elektrische Netz angeschlossen ist, wobei der Umrichter einen an den Rotor angeschlossenen generatorseitigen Wechselrichter, einen netzseitigen Wechselrichter und wenigstens einen Umrichterregler zum Steuern der von wenigstens einem der Wechselrichter abgegebenen Ströme umfasst, umfassend die folgenden Verfahrensschritte:
- Detektieren einer Änderung der anliegenden elektrischen Spannung, der abgegebenen Wirkströme und/oder der abgegebenen Blindströme an jedem einem Wechselrichter,
- Bestimmen, ob die detektierte Änderung einer vorbestimmten Änderung entspricht, und
- Änderung der Sollwerte der abzugebenden Wirkströme und/oder der abzugebenden Blindströme des jeweiligen anderen Wechselrichters, sofern die detektierte Änderung einer vorbestimmten Änderung entspricht.

2. Verfahren zum Steuern eines Umrichters einer Windenergieanlage nach Anspruch 1,
**dadurch gekennzeichnet, dass**
die vorbestimmte Änderung der anliegenden elektrischen Spannung, der abgegebenen Wirkströme und/oder der abgegebenen Blindströme an einem der Wechselrichter das Erreichen eines vorgegebenen Grenzwerts ist.

3. Verfahren zum Steuern eines Umrichters einer Windenergieanlage nach Anspruch 1 oder 2,
**dadurch gekennzeichnet, dass**
sich der maximal vorgebbare Sollwert der abzugebenden Blindströme des anderen Wechselrichters unter Berücksichtigung der abgegebenen Wirkströme und einer vorgebbaren Regelreserve der Wirkströme bestimmt wird.

4. Verfahren zum Steuern eines Umrichters einer Windenergieanlage nach einem der vorhergehenden Ansprüche,
**dadurch gekennzeichnet, dass**
die vorbestimmte Änderung das Erreichen eines oberen Spannungsgrenzwerts der anliegenden Spannung an einem Wechselrichter ist und der andere Wechselrichter die Blindstromabgabe erhöht, um die anliegende Spannung an dem den Grenzwert erreichenden Wechselrichter zu verringern.

5. Verfahren zum Steuern eines Umrichters einer Windenergieanlage nach einem der vorhergehenden Ansprüche,
**dadurch gekennzeichnet, dass**
die vorbestimmte Änderung eine insbesondere durch die Wirk- und/oder Blindstromabgabe des Wechselrichters verursachte Überschreitung eines vorgegebenen Temperaturgrenzwerts mindestens einer Komponente der Windenergieanlage ist, wobei sich die Komponente im dem dem Wechselrichter zugeordneten Leistungsstrang befindet.

6. Verfahren zum Steuern eines Umrichters einer Windenergieanlage nach Anspruch 5,
**dadurch gekennzeichnet, dass**
die vorbestimmte Änderung die Ereignisfolge Überschreiten einer Grenze der Stromabgabe gefolgt von dem Überschreiten eines Temperaturgrenzwerts ist.

7. Verfahren zum Steuern eines Umrichters einer Windenergieanlage nach einem der vorhergehenden Ansprüche,
**dadurch gekennzeichnet, dass**
die Summe der von den Wechselrichtern an das elektrische Netz abgegebenen Blind- und/oder Wirkströme, bzw. die Blind- und/oder Wirkleistungen weitgehend unverändert bleiben.

8. Verfahren zum Steuern eines Umrichters einer Windenergieanlage nach einem der vorhergehenden Ansprüche,
**dadurch gekennzeichnet, dass**
die Blind- und/oder Wirkstromabgabe so geregelt wird, dass die relative Auslastung bezogen auf die maximale Stromabgabe der Wechselrichter oder der den Wechselrichtern zugeordneten Leistungsstränge möglichst gleich sind.

9. Verfahren zum Steuern eines Umrichters einer Windenergieanlage nach einem der vorhergehenden Ansprüche,
**dadurch gekennzeichnet, dass**
bei einer so gearteten Spannungsasymmetrie, dass die Abweichung einer an einem Wechselrichter anliegenden Spannung einer Phase über einen Grenzwert hinausgeht, die Blindstromabgabe des anderen Wechselrichters so verändert wird, dass die Spannungsasymmetrie verringert wird.

10. Verfahren zum Steuern eines Umrichters einer Windenergieanlage nach einem der vorhergehenden Ansprüche,
**dadurch gekennzeichnet, dass**
der Umrichterregler bei einem Sollwertsprung der von der Windenergieanlage insgesamt abzugebenden Blindströme auf einen neuen, höheren Sollwert, insbesondere als Folge einer sprunghaften Änderung der anliegenden Spannung, der Umrichterregler die neuen Sollwerte zwischen dem generatorseitigen und netzseitigen Wechselrichter so aufteilt, dass die Summe der neuen Sollwerte für die Ströme der Wechselrichter dem neuen Sollwert entspricht, wobei ein möglichst großer Anteil des abzugebenden Blindstroms auf den Wechselrichter mit der höheren Dynamik entfällt, wobei ein Grenzwert für Blindströme für diesen Wechselrichter erreicht werden kann und der Sollwert des Wechselrichters mit der niedrigeren Dynamik sich aus der verbleibenden Differenz des Sollwerts der Gesamtblindleistung zu dem Sollwert der Blindleistung des Wechselrichters mit der höheren Dynamik ergibt.

11. Verfahren zum Steuern eines Umrichters einer Windenergieanlage nach Anspruch 10,
**dadurch gekennzeichnet, dass**
nach einer vorgebbaren Zeitdauer und/oder nach Erreichen eines vorgebbaren Sollwerts der Umrichterregler die Sollwerte der Wechselrichter in vorgebbaren Schritten derart verändert, dass der Wechselrichter mit der niedrigeren Dynamik einen möglichst großen Anteil der abzugebenden Blindströme abgibt, bis ein Grenzwert für diesen Wechselrichter erreicht ist und der Sollwert des Wechselrichters mit der höheren Dynamik sich aus der Differenz des Sollwerts der Gesamtblindleistung zu dem Sollwert der Blindleistung des Wechselrichters mit der niedrigeren Dynamik ergibt.

12. Windenergieanlage mit einem doppelt gespeisten Asynchrongenerator (4) und einem Umrichter (7), der am Rotor (6) eines mit seinem Stator an einem elektrischen Netz angeschlossenen doppelt gespeisten Asynchrongenerators (4) zur Einspeisung elektrischer Energie in das elektrische Netz (10) angeschlossen ist, wobei der Umrichter (7) einen an den Rotor angeschlossenen generatorseitigen Wechselrichter (71), einen netzseitigen Wechselrichter (72) und wenigstens einen Umrichterregler (20) zum Steuern der von wenigstens einem der Wechselrichter (71, 72) abgegebenen Ströme umfasst,
**dadurch gekennzeichnet, dass**
mittels Sensoren (31, 32) die an den Wechselrichtern (71, 72) anliegenden elektrischen Spannungen, die von den Wechselrichtern (71, 72) abgegebenen Wirkströme und/oder die abgegebenen Blindströme erfasst werden, in einem Änderungsbestimmungsmodul (24), in dem vorbestimmte Änderungen hinterlegt sind, verglichen werden und bei Vorliegen einer vorbestimmten Änderung der anliegenden elektrischen Spannung, der abgegebenen Wirkströme und/oder der abgegebenen Blindströme an jedem einem der Wechselrichter (71, 72) die am jeweiligen anderen Wechselrichter (72, 71) anliegenden Sollwerte für die abgegebenen Wirkströme und/oder die abgegebenen Blindströme verändert werden.

13. Windenergieanlage mit einem Umrichter nach Anspruch 12,
**dadurch gekennzeichnet, dass**
die im Änderungsbestimmungsmodul (24) hinterlegte vorbestimmte Änderung der anliegenden elektrischen Spannung, der abgegebenen Wirkströme und/oder der abgegebenen Blindströme an einem der Wechselrichter (71, 72) das Erreichen eines vorgegebenen Grenzwerts ist.

14. Windenergieanlage mit einem Umrichter nach Anspruch 12 oder 13,
**dadurch gekennzeichnet, dass**
der Sollwert für die Abgabe von Blindstrom des den Grenzwert erreichenden Wechselrichters (71, 72) derart verändert wird, dass der Sollwert einer verringerten Abgabe kapazitiven Blindstroms und/oder einer erhöhten Abgabe induktiven Blindstroms entspricht.

15. Windenergieanlage mit einem Umrichter nach einem der Ansprüche 12 bis 14,
**dadurch gekennzeichnet, dass**
sofern das Änderungsbestimmungsmodul (24) das Erreichen eines Grenzwerts der anliegenden Spannung eines Wechselrichters (71, 72) bestimmt hat, der Sollwert für die Blindstromabgabe am anderen Wechselrichter (72, 71) so verändert wird, dass der Sollwert einer Erhöhung der Blindstromabgabe entspricht.

16. Windenergieanlage mit einem Umrichter nach einem der Ansprüche 12 bis 15,
**dadurch gekennzeichnet, dass**
der Umrichterregler (20) mittels Temperatursensoren (91, 92) die Temperaturwerte der Komponenten der den Wechselrichtern (71, 72) zugeordneten Leistungsstränge ermittelt und die im Änderungsbestimmungsmodul (24) hinterlegte vorbestimmte Änderung eine insbesondere durch die Wirk- und/oder Blindstromabgabe des Wechselrichters (71, 72) verursachte Überschreitung eines vorgegebenen Temperaturgrenzwerts mindestens einer Komponente der Windenergieanlage ist, wobei sich die Komponente in dem dem Wechselrichter (71, 72) zugeordneten Leistungsstrang befindet.

17. Windenergieanlage mit einem Umrichter nach einem der Ansprüche 12 bis 16,
**dadurch gekennzeichnet, dass**
bei einem Umrichterregler (20), der für jeden Wechselrichter (71, 72) einen eigenständigen Wechselrichterregler (21, 22) umfasst, ein Abgleichmodul (40) die jeweiligen Sollwerte, Istwerte und/oder Regelabweichungen für die Wirkströme, Blindströme und/oder anliegenden Spannungen zwischen den Wechselrichtern überträgt.

## Claims

1. Method for controlling a converter of a wind energy installation, which converter is connected to the rotor of a doubly-fed asynchronous generator, connected by its stator to an electrical grid, for feeding electrical power into the electrical grid, with the converter having a generator-side inverter connected to the rotor, a grid-side inverter and at least one converter regulator for controlling the currents emitted from at least one of the inverters, comprising the following method steps:
- detection of a change in the electrical voltage which is present, in the emitted real currents and/or the emitted reactive currents at each inverter,
- determination of whether the detected change corresponds to a predetermined change, and
- changing the nominal values of the real currents to be emitted and/or the reactive currents to be emitted from the respective other inverter, if the detected change corresponds to a predetermined change.

2. Method for controlling a converter of a wind energy installation according to Claim 1,
**characterized in that**
the predetermined change in the electrical voltage which is present, in the emitted real currents and/or the emitted reactive currents at one of the inverters is the reaching of a predetermined limit value.

3. Method for controlling a converter of a wind energy installation according to Claim 1 or 2,
**characterized in that**
the maximum predeterminable nominal value of the reactive currents to be emitted from the other inverter is determined taking account of the emitted real currents and a predeterminable control margin of the real currents.

4. Method for controlling a converter of a wind energy installation according to one of the preceding claims,
**characterized in that**
the predetermined change is the reaching of an upper voltage limit value of the voltage which is present at an inverter, and the other inverter increases the reactive current output in order to reduce the voltage which is present at the inverter which has reached the limit value.

5. Method for controlling a converter of a wind energy installation according to one of the preceding claims,
**characterized in that**
the predetermined change is at least one component in the wind energy installation exceeding a predetermined temperature limit value, caused in particular by the real current and/or reactive current output from the inverter, with the component being located in the power strand associated with the inverter.

6. Method for controlling a converter of a wind energy installation according to Claim 5,
**characterized in that**
the predetermined change is the event sequence exceeding a limit of the current output followed by the exceeding of a temperature limit value.

7. Method for controlling a converter of a wind energy installation according to one of the preceding claims,
**characterized in that**
the sum of the reactive and/or real currents emitted from the inverters to the electrical grid, and the reactive and/or real powers remain largely unchanged.

8. Method for controlling a converter of a wind energy installation according to one of the preceding claims,
**characterized in that**
the reactive and/or real current output is regulated such that the relative load with respect to the maximum current output of the inverters or the power strands associated with the inverters is as equal as possible.

9. Method for controlling a converter of a wind energy installation according to one of the preceding claims,
**characterized in that**
in the case of a voltage unbalance of such a type that the discrepancy in a voltage which is present at an inverter in one phase goes beyond a limit value, the reactive current output of the other inverter is changed so as to reduce the voltage unbalance.

10. Method for controlling a converter of a wind energy installation according to one of the preceding claims,
**characterized in that**
in the event of a sudden change in the nominal value of the reactive currents to be emitted in total from the wind energy installation to a new, higher nominal value, in particular as a consequence of a sudden change in the voltage which is present, the converter regulator splits the new nominal values between the generator-side and grid-side inverters such that the sum of the new nominal values for the currents of the inverters corresponds to the new nominal value, with as high a proportion as possible of the reactive current to be emitted being produced on the inverter with the higher dynamics, in which case a limit value can be reached for reactive currents for this inverter, and the nominal value of the inverter with the lower dynamics is obtained from the remaining difference between the nominal value of the total reactive power and the nominal value of the reactive power of the inverter with the higher dynamics.

11. Method for controlling a converter of a wind energy installation according to Claim 10, **characterized in that**,
after a predeterminable time period and/or after reaching a predeterminable nominal value, the converter regulator changes the nominal values of the inverters in predeterminable steps such that the inverter with the lower dynamics emits as high a proportion as possible of the reactive currents to be emitted, until a limit value for this inverter is reached, and the nominal value of the inverter with the higher dynamics is obtained from the difference between the nominal value of the total reactive power and the nominal value of the reactive power of the inverter with the lower dynamics.

12. Wind energy installation having a doubly-fed asynchronous generator (4) and a converter (7) which is connected to the rotor (6) of a doubly-fed asynchronous generator (4), connected by its stator to an electrical grid, for feeding electrical power into the electrical grid (10), with the converter (7) having a generator-side inverter (71) connected to the rotor, a grid-side inverter (72) and at least one converter regulator (20) for controlling the currents emitted from at least one of the inverters (71, 72),
**characterized in that**
the electrical voltages which are present at the inverters (71, 72), the real currents which are emitted from the inverters (71, 72), and/or the emitted reactive currents are detected by means of sensors (31, 32), are compared in a change determining module (24) in which predetermined changes are stored, and, in the event of a predetermined change in the electrical voltage which is present, in the emitted real currents and/or the emitted reactive currents at each of the inverters (71, 72), the nominal values which are present at the respective other inverters (72, 71) for the emitted real currents and/or the emitted reactive currents are changed.

13. Wind energy installation having a converter according to Claim 12,
**characterized in that**
the predetermined change, which is stored in the change determining module (24), in the electrical voltage which is present, in the emitted real currents and/or the emitted reactive currents at one of the inverters (71, 72) is the reaching of a predetermined limit value.

14. Wind energy installation having a converter according to Claim 12 or 13,
**characterized in that**
the nominal value for the output of reactive current from the inverter (71, 72) which reaches the limit value is changed such that the nominal value corresponds to a reduced output of capacitive reactive current and/or an increased output of inductive reactive current.

15. Wind energy installation having a converter according to one of Claims 12 to 14,
**characterized in that**
when the change determining module (24) has determined that the voltage which is present at an inverter (71, 72) has reached a limit value, the nominal value for the reactive current output at the other inverter (72, 71) is changed such that the nominal value corresponds to an increase in the reactive current output.

16. Wind energy installation having a converter according to one of Claims 12 to 15,
**characterized in that**
the converter regulator (20) uses temperature sensors (91, 92) to determine the temperature values of the components in the power strands associated with the inverters (71, 72), and the predetermined change, which is stored in the change determining module (24), is at least one component in the wind energy installation exceeding a predetermined temperature limit value, caused in particular by the real current and/or reactive current output from the inverter (71, 72), with the component being located in the power strand associated with the inverter (71, 72).

17. Wind energy installation having a converter according to one of Claims 12 to 16,
**characterized in that**,
in the case of a converter regulator (20) which comprises an autonomous inverter regulator (21, 22) for each inverter (71, 72), an adaptation module (40) transmits the respective nominal values, actual values and/or control errors for the real currents, reactive currents and/or voltages which are present between the inverters.

## Revendications

1. Procédé destiné à la commande d'un convertisseur d'une installation éolienne, laquelle est raccordée au rotor d'un générateur asynchrone à alimentation double qui est connecté au réseau électrique au moyen de son stator, en vue de l'alimentation en énergie électrique dans le réseau électrique ; selon lequel le convertisseur comprend un onduleur, lequel se trouve se trouve du côté du générateur et lequel est raccordé au rotor, un onduleur, lequel se trouve du côté du réseau, ainsi qu'au moins un régulateur de convertisseur en vue de la commande des courants fournis par au moins l'un des onduleurs, lequel procédé comprend les phases de procédé suivantes :
- la détection d'une variation de la tension électrique appliquée, des courants actifs fournis et/ou des courants réactifs fournis à chacun des onduleurs ;
- la détermination si la variation détectée correspond à une variation prédéfinie ; et
- la variation des valeurs de consigne des courants actifs, qui doivent être fournis, et/ou des courants réactifs, qui doivent être fournis, de l'autre onduleur respectif, dans la mesure où la variation détectée correspond à une variation prédéfinie.

2. Procédé destiné à la commande d'un convertisseur d'une installation éolienne selon la revendication 1,
**caractérisé en ce que**
la variation prédéfinie de la tension électrique appliquée, des courants actifs fournis et/ou des courants réactifs fournis à l'un des onduleurs correspond à l'atteinte d'une valeur limite prédéterminée.

3. Procédé destiné à la commande d'un convertisseur d'une installation éolienne selon la revendication 1 ou 2,
**caractérisé en ce que**
la valeur de consigne maximale qui peut être prédéfinie des courants réactifs qui doivent être fournis de l'autre onduleur est déterminée en tenant compte des courants actifs fournis et d'une réserve de réglage des courants actifs, laquelle peut être prédéfinie.

4. Procédé destiné à la commande d'un convertisseur d'une installation éolienne selon l'une des revendications précédentes,
**caractérisé en ce que**
la variation prédéfinie correspond à l'atteinte d'une valeur limite supérieure de tension de la tension appliquée au niveau d'un onduleur et l'autre onduleur augmente la fourniture de courants réactifs, en vue de réduire la tension appliquée au niveau de l'onduleur qui atteint la valeur limite.

5. Procédé destiné à la commande d'un convertisseur d'une installation éolienne selon l'une des revendications précédentes,
**caractérisé en ce que**
la variation prédéfinie correspond à un dépassement d'une valeur limite de température prédéterminée d'au moins un composant de l'installation éolienne, lequel dépassement est provoqué en particulier par la fourniture de courants actifs et/ou de courants réactifs de l'onduleur ; selon lequel le composant se trouve dans le circuit de puissance qui est associé à l'onduleur.

6. Procédé destiné à la commande d'un convertisseur d'une installation éolienne selon la revendication 5,
**caractérisé en ce que**
la variation prédéfinie correspond à la suite d'événements qui aboutit au dépassement d'une limite de la fourniture en courants, suivie par le dépassement d'une valeur limite de température.

7. Procédé destiné à la commande d'un convertisseur d'une installation éolienne selon l'une des revendications précédentes,
**caractérisé en ce que**
la somme des courants actifs et/ou des courants réactifs fournis au réseau électrique par les onduleurs, respectivement les puissances des courants actifs et/ou des courants réactifs, demeure(nt) inchangée(s) pour la majeure partie.

8. Procédé destiné à la commande d'un convertisseur d'une installation éolienne selon l'une des revendications précédentes,
**caractérisé en ce que**
la fourniture en courants actifs et/ou en courants réactifs est régulée de telle sorte que le coefficient d'utilisation relatif, mesuré par rapport à la fourniture maximale en courant des onduleurs, ou les circuits de puissance qui sont associés aux onduleurs reste(nt) identique(s) dans la mesure du possible.

9. Procédé destiné à la commande d'un convertisseur d'une installation éolienne selon l'une des revendications précédentes,
**caractérisé en ce que**
dans le cas où une asymétrie de tension de cette nature est si importante que l'écart d'une tension d'une phase qui est appliquée sur un onduleur va au-delà d'une valeur limite, la fourniture en courants réactifs de l'autre onduleur est modifiée de telle sorte que l'asymétrie de tension s'en trouve réduite.

10. Procédé destiné à la commande d'un convertisseur d'une installation éolienne selon l'une des revendications précédentes,
**caractérisé en ce que**
dans le cas d'un saut de la valeur de consigne des courants réactifs, lesquels doivent être fournis au total par l'installation éolienne, vers une nouvelle valeur de consigne qui est plus élevée, en particulier à la suite d'une variation importante de la tension appliquée, le régulateur de convertisseur répartit les nouvelles valeurs de consigne entre l'onduleur qui se trouve du côté du générateur et l'onduleur qui se trouve du côté du réseau, de telle sorte que la somme des nouvelles valeurs de consigne pour les courants des onduleurs correspond aux nouvelles valeurs de consigne ; selon lequel la plus grande partie possible du courant réactif qui doit être fourni est répartie sur l'onduleur qui présente la dynamique la plus élevée ; selon lequel une valeur limite pour les courants réactifs peut être atteinte pour cet onduleur et la valeur de consigne de l'onduleur qui présente la dynamique la plus basse est obtenue à partir de la différence restante de la valeur de consigne de la puissance réactive totale par rapport à la valeur de consigne de la puissance réactive de l'onduleur qui présente la dynamique la plus élevée.

11. Procédé destiné à la commande d'un convertisseur d'une installation éolienne selon la revendication 10,
**caractérisé en ce que**
à l'issue d'une période de temps pouvant être prédéfinie et/ou après l'atteinte d'une valeur de consigne pouvant être prédéfinie des régulateurs de convertisseur, les valeurs de consigne des onduleurs varient de telle sorte dans des phases pouvant être prédéfinies que l'onduleur qui présente la dynamique la plus basse fournit la plus grande part possible des courants réactifs qui doivent être fournis jusqu'à ce qu'une valeur limite soit atteinte pour cet onduleur, et la valeur de consigne de l'onduleur qui présente la dynamique la plus élevée est obtenue à partir de la différence de la valeur de consigne de la puissance réactive totale par rapport à la valeur de consigne de la puissance réactive de l'onduleur qui présente la dynamique la plus basse.

12. Installation éolienne avec un générateur asynchrone (4) à alimentation double et avec un convertisseur (7), lequel est raccordé au rotor (6) d'un générateur asynchrone (4) à alimentation double qui est connecté à un réseau électrique au moyen de son stator, en vue de l'alimentation en énergie électrique dans le réseau électrique (10) ;
selon laquelle le convertisseur (7) comprend un onduleur (71), lequel se trouve du côté du générateur et lequel est raccordé au rotor, un onduleur (72), lequel se trouve du côté du réseau, ainsi qu'au moins un régulateur de convertisseur (20) en vue de la commande des courants fournis par au moins l'un des onduleurs (71, 72) ; **caractérisée en ce que**
les tensions électriques qui sont appliquées sur les onduleurs (71, 72) sont comparées au moyen de capteurs (31, 32) dans un module de détermination des variations (24), au sein duquel des variations prédéfinies sont mémorisées, lesquelles tensions électriques sont détectées par les courants actifs fournis et/ou les courants réactifs fournis par les onduleurs (71, 72) ; et selon laquelle, en présence d'une variation prédéfinie de la tension électrique appliquée, des courants actifs fournis et/ou des courants réactifs fournis à chacun des onduleurs (71, 72), les valeurs de consigne, qui sont appliquées sur l'autre onduleur (72, 71) respectif, sont modifiées pour les courants actifs fournis et/ou les courants réactifs fournis.

13. Installation éolienne avec un convertisseur selon la revendication 12,
**caractérisée en ce que**
la variation prédéterminée de la tension électrique appliquée, des courants actifs fournis et/ou des courants réactifs fournis à l'un des onduleurs (71, 72), laquelle variation est mémorisée dans le module de détermination des variations (24), correspond à l'atteinte d'une valeur limite prédéterminée.

14. Installation éolienne avec un convertisseur selon la revendication 12 ou 13,
**caractérisée en ce que**
la valeur de consigne pour la fourniture de courants réactifs de l'onduleur (71, 72) qui atteint la valeur limite est modifiée de telle sorte que la valeur de consigne correspond à une fourniture réduite de courants réactifs capacitifs et/ou à une fourniture accrue de courants réactifs inductifs.

15. Installation éolienne avec un convertisseur selon l'une des revendications 12 à 14,
**caractérisée en ce que**
dans la mesure où le module de détermination des variations (24) a déterminé l'atteinte d'une valeur limite de la tension appliquée d'un onduleur (71, 72), la valeur de consigne pour la fourniture de courants réactifs à l'autre onduleur (72, 71) est modifiée de telle sorte que la valeur de consigne correspond à une augmentation de la fourniture de courants réactifs.

16. Installation éolienne avec un convertisseur selon l'une des revendications 12 à 15,
**caractérisée en ce que**
le régulateur de convertisseur (20) détermine les valeurs de température des composants des circuits de puissance qui sont associés aux onduleurs (71, 72) au moyen de sondes de température (91, 92) et la variation prédéfinie, laquelle est mémorisée dans le module de détermination des variations (24), correspond à un dépassement d'une valeur limite de température prédéterminée d'au moins un composant de l'installation éolienne, lequel dépassement est provoqué en particulier par la fourniture de courants actifs et/ou de courants réactifs de l'onduleur (71, 72) ;
selon laquelle le composant se trouve dans le circuit de puissance qui est associé à l'onduleur (71, 72).

17. Installation éolienne avec un convertisseur selon l'une des revendications 12 à 16,
**caractérisée en ce que**
dans le cas d'un régulateur de convertisseur (20), lequel comprend pour chaque onduleur (71, 72) un régulateur autonome pour onduleur (21, 22), un module de réglage (40) transmet les valeurs de consigne respectives, les valeurs réelles respectives et/ou les écarts de réglage respectifs pour les courants actifs, les courants réactifs et/ou pour les tensions appliquées entre les onduleurs.
